Europäisches Patentamt

European Patent Office

Office européen des brevets

(19)

(11) Veröffentlichungsnummer: **0 307 393**
**B1**

(12) **EUROPÄISCHE PATENTSCHRIFT**

(45) Veröffentlichungstag der Patentschrift: **08.08.90**

(21) Anmeldenummer: **87900645.0**

(22) Anmeldetag: **14.01.87**

(86) Internationale Anmeldenummer:
**PCT/DE87/00010**

(87) Internationale Veröffentlichungsnummer:
**WO 87/07329 03.12.87 Gazette 87/27**

(51) Int. Cl.⁵: **F 02 D 41/06, F 02 D 41/30**

(54) **VERFAHREN UND ELEKTRONISCHES BRENNKRAFTMASCHINENSTEUERSYSTEM ZUR KALTSTARTSTEUERUNG.**

(30) Priorität: **21.05.86 DE 3617104**

(43) Veröffentlichungstag der Anmeldung:
**22.03.89 Patentblatt 89/12**

(45) Bekanntmachung des Hinweises auf die Patenterteilung:
**08.08.90 Patentblatt 90/32**

(84) Benannte Vertragsstaaten:
**DE FR**

(56) Entgegenhaltungen:
**EP-A- 51 723**
**FR-A-1 598 748**
**FR-A-2 151 715**
**GB-A-2 047 351**
**US-A-4 463 730**

(73) Patentinhaber: **ROBERT BOSCH GMBH**
**Postfach 50**
**D-7000 Stuttgart 1 (DE)**

(72) Erfinder: **ROSENAU, Willi**
**Wiesenstrasse 44**
**D-7146 Tamm (DE)**
Erfinder: **VALENTA, Paul**
**Nelkenweg 25**
**D-7120 Bietigheim (DE)**
Erfinder: **THIEME, Michael**
**Goethestrasse 27**
**D-7141 Möglingen (DE)**

## Beschreibung

**Stand der Technik**

Die Erfindung geht aus von einem Verfahren zur Kaltstartsteuerung nach der Gattung des Anspruchs 1 bzw. 12.

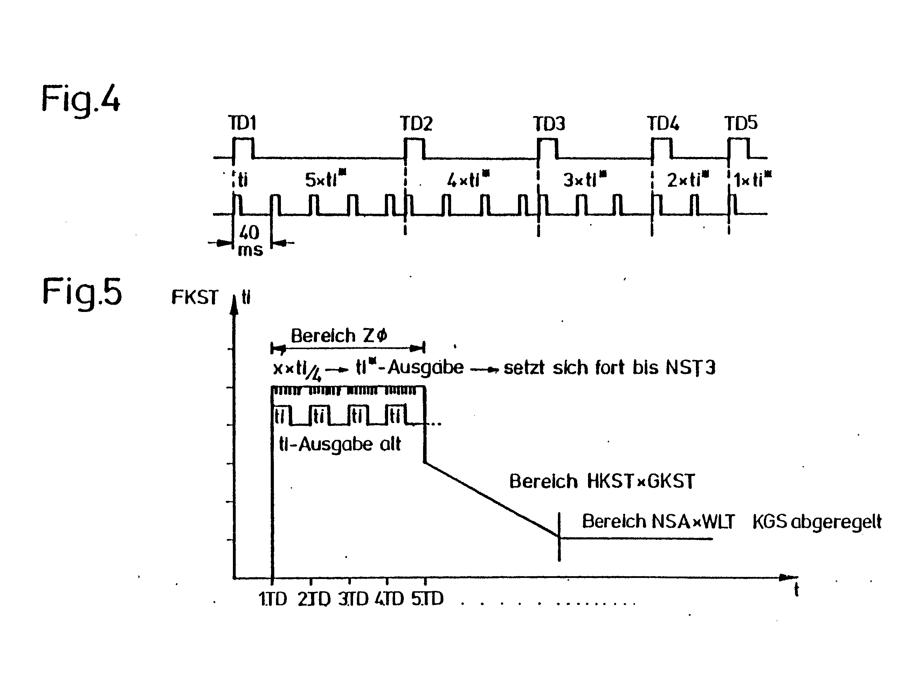

Die US—A—4 463 730 zeigt in Figur 4 und beschreibt insbesondere in Spalte 8 ein Verfahren zur Kaltstartsteuerung. Dabei werden erhöhte Kraftstoffmengen in aufeinanderfolgenden Zündzeitpunktintervallen in zwei bis vier in gleichmäßigen zeitlichen Abstand erzeugten Impulsen asynchron mit der Maschinendrehzahl abgegeben. Oberhalb einer bestimmten Drehzahl wird dann diese Form der Einspritzung unterbrochen und auf einem Normalbetrieb übergegangen.

Die GB—A—2 047 351 offenbart ein System, bei dem lediglich die Mehrmenge beim Start aufgeteilt wird in mehrere diskrete Einspritzmengen.

Schließlich werden bei einem Gegenstand gemäß der FR—A—1 598 748 Kaltstartimpulse derart regelmäßig eingespritzt, daß bei großen Zündzeitpunktintervallen mehr Einspritzimpulse als bei kleineren hervorgerufen werden.

Auch generell gesehen sind Maßnahmen zur Kaltstartsteuerung oder Kaltstartanhebung bei Brennkraftmaschinen zugeordneten Kraftstoffzumeßsystemen, etwa Kraftstoffeinspritzanlagen, Vergasern und dgl. bekannt (DE—AS—25 11 974, DE—OS—30 42 245). Auch diese bekannten System sind so ausgelegt, daß während des Starts einer Brennkraftmaschine vor allem im interen Temperaturbereich dieser eine Mehrmenge an Kraftstoff zugemessen wird, um so mögliche Kondensationsverluste auftrund der kalten Ansaugrohr- und Zylinderinnenwände zu kompensieren. Es ist ebenfalls vielfältig bekannt, diese Mehrmenge temperaturabhängig vorzugeben, also Anfangseinspritzzeiten ti als Funktion der Umgebungstemperatur beim Start vorzugeben und anschließend drehzahl- und/oder zeitabhängig abzuregeln.

Ähnliches gilt für den Bereich der Zündung, wo ebenfalls drehzahlabhängige Zündverstellungen während des Starts bekannt sind—hierauf ist in der erwähnten DE—OS—30 42 245 genauer eingegangen.

Um sowohl der Forderung nach immer besserem Startverhalten bei möglichst geringem Kraftstoffverbrauch, auch im Hinblick auf eine schärfer werdende Abgasgesetzgebung, zu entsprechen, werden bei der DE—OS—30 42 245 während des Kaltstarts drei verschiedene Phasen für die Kraftstoffmehrmengensteuerung ind Mehrmengenabregelung vorgesehen, wobei darüber hinaus der Zündwinkel temperatur- und drehzahlabhängig verstellt wird. Die Menge des zugeführten Kraftstoffs folgt dabei entweder zeitbezogen oder auf die Drehzahl der Brennkraftmaschine abgestellt während des Starts einem bestimmten Kurvenverlauf, der so ausgebildet sein kann, daß während einer ersten Phase bis zum Erreichen einer vorgegebenen Anzahl von Zündungen oder Umdrehungen der Brennkraftmaschine eine konstante Mehrmenge zugeführt wird (Plateaubereich), an welchen sich eine Mehrmengenabregelungsphase anschließt, in welcher die zugeführte Kraftstoffmenge linear oder Knickfunktionen folgend bis zu einem Übergangsbereich abfällt, der beispielsweise bei Erreichen einer oberen Startdrehzahl einsetzt und den Übergang in die sogenannte Nachstartanreicherung bzw. den Warmlauf kennzeichnet. In entsprechender Weise erfolgt beim Zündsystem eine zunehmende Frühverstellung in einem unteren Drehzahlbereich sowie eine gegen höhere Temperatur stärker werdende Spätverstellung.

Die hierbei jeweils vorgegebenen Kurvenverläufe und Funktionen sind teilweise schwierig zu realisieren und auch umständlich, wobei mindestens im Bereich der Mehrmengenabregelung eine drehzahlabhängige Funktion und eine von der Anzahl der Zündungen abhängige Funktion einzubeziehen sind. Desgleichen muß im Plateaubereich (Kaltstartbereich I) auf die Anzahl der Zündungen geachtet werden, oder es muß, um den Übergang vom Plateaubereich zur Mehrmengenabregelung durchführen zu können, auf eine Kaltstartdrehzahlschwelle NKS=f(n)-Schwelle geachtet werden.

Eine solche Vielzahl von Kaltstartfunktionen ist auch dann aufwendig, wenn wie bei modernen Brennkraftmaschinensteuerstystemen üblich, diese rechnergesteuert sind und die jeweiligen Funktionen und Werte aus einem Speicher bei bestimmten Programmpunkten abgerufen werden können.

Ferner ergibt sich bei den bekannten Kaltstartsteuersystemen jedoch das Problem, daß diese die nach den jeweiligen Betriebszuständen erforderliche und berechnete Kraftstoffmenge durch eine entsprechend gezielte, jedoch pro Zündung lediglich einmalige Öffnung des jeweiligen Einspritzventils abgeben, was dazu führen kann, daß besonders bei bestimmten Motorentypen (etwa mit kritischer Kerzenlage) die Erzeugung eines zündfähigen Gemisches bei Minustemperaturen problematisch sein kann, daher ist die Anpassung der Kaltstartsteuerungssystem (KSS-Systeme) bei bestimmten Motorentypen aufgrund der Brennraumgestaltung und der schlechten Kerzenlage häufig sehr schwierig, so daß auch die Kaltstartgrenze, bei welcher eine Brennkraftmaschine noch anspringt, problematisch werden kann. Der Grund hierfür liegt darin, daß nicht auszuschließen ist, daß der zum Teil in erheblicher Menge eingespritzte Kraftstoff auch in flüssiger Form an die Kerze gelangt und dann den Zündfunken löscht oder daß ein zündfähiges Gemisch einfach nicht gebildet werden kann.

Der Erfindung liegt daher die Aufgabe zugrunde, sowohl eine Vereinfachung der bekannten Kaltstartsteuerung (KSS) zu erreichen als auch sicherzustellen, daß bei Absenkung der Kaltstartgrenze stets ein zündfähiges Gemisch in den Brennraum eingebracht werden kann.

**Vorteile der Erfindung**

Die Erfindung löst diese Aufgabe mit den kennzeichnenden Merkmalen des Anspruchs 1 bzw.

des Anspruchs 12 und hat den Vorteil, daß, wie empirische Untersuchungen ergeben haben, eine erhebliche Absenkung der Kaltstartgrenze von in numerischen Werten −22°C, die mit dem bekannten Kaltstartsteuerungssystemen erreicht werden, auf nunmehr −28°C erzielt werden konnte (Versuchsträger Volvo B23F mit Automatikgetriebe und bleifreiem Winterbenzin).

Dabei gelingt es durch den Einsatz der Erfindung, auch bei solchen Motortypen, bei denen unter Zugrundelegung konventioneller Kaltstartsysteme und bestimmten Temperaturbedingungen ein Anspringen der Brennkraftmaschine sonst nicht erreicht werden konnte, unmittelbare Spontanstarts zu erzielen.

Neben diesen Vorteilen ergibt sich durch die Erfindung ferner eine drastische Vereinfachung der bekannten Kaltstartsteuerungssysteme mit dem Vorteil, daß eine Überflutung des Motors mit Kraftstoff, also das sogenannte Absaufen, vermieden wird, durch Erzielung großer benetzter Oberflächen im Brennraum und Saugrohrbereich.

Ferner macht die Erfindung die bisher erforderliche, sehr genaue Faktorenabstimmung bei der Bildung der Startkennlinie entbehrlich—die Brennkraftmaschine reagiert nicht mehr so empfindlich wie bisher zu erwarten und realisiert. Mit anderen Worten, die sehr genaue Orientierung an bestimmten spezifischen Kaltstart-Kurvenverläufen, die bisher ein Anspringen auch unter kritischen Gegebenheiten sicherstellen konnten, ist nicht mehr erforderlich, das Start- und Anspringverhalten von Brennkraftmaschinen wird unkritisch, auch bei tiefen und sehr tiefen Temperaturen.

Die schwierig zu applizierenden, drehzahlabhängigen und zündanzahlabhängigen Funktionen für den Übergangsbereich (Knickverlaufbereich GKS=f(n) und HKS=f(Anzahl TD-Zündungen) ergeben sich als entbehrlich, ebenso wie die Funktion Zo=Anzahl der Zündungen im Kaltstartbereich I (Plateaubereich) bzw. die Ermittlung der Drehzahlschwelle NKS=f(n)-Schwelle für den Übergang vom Bereich I in den Bereich II.

Durch die in den Unteransprüchen aufgeführten Maßnahmen sind vorteilhafte Weiterbildungen und Verbesserungen der Erfindung möglich. Besonders vorteilhaft ist die einfache Realisierung der Vielfach-Kurzdauer-Einspritzimpulse ti* durch ein vom Rechner gebildetes Zeitraster, mit welchem die die Einspritzventile beaufschlagende Endstufe angesteuert wird.

Zeichnung

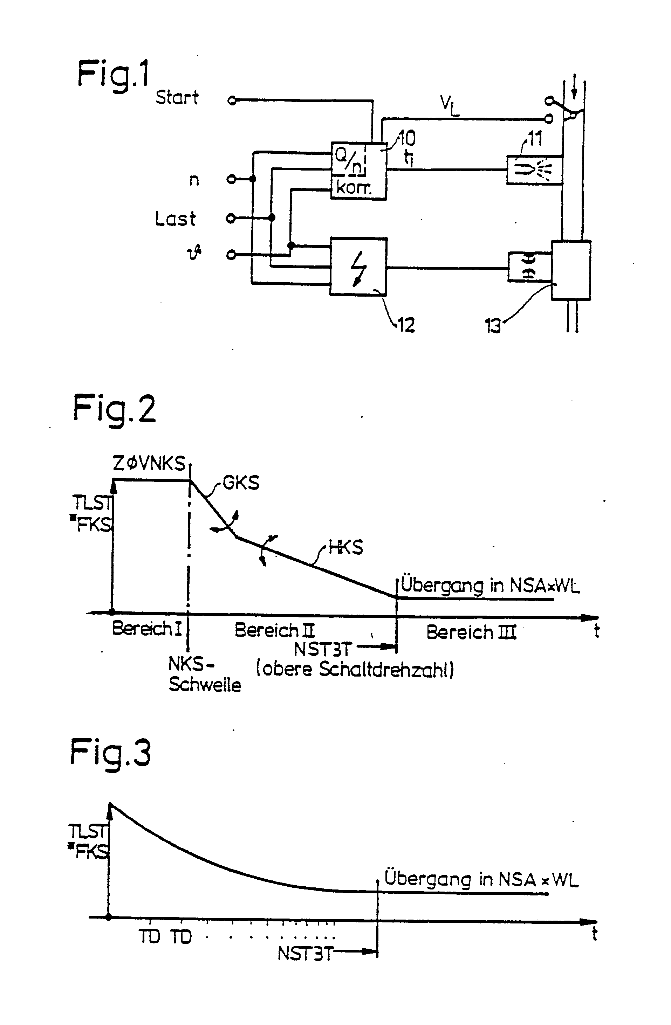

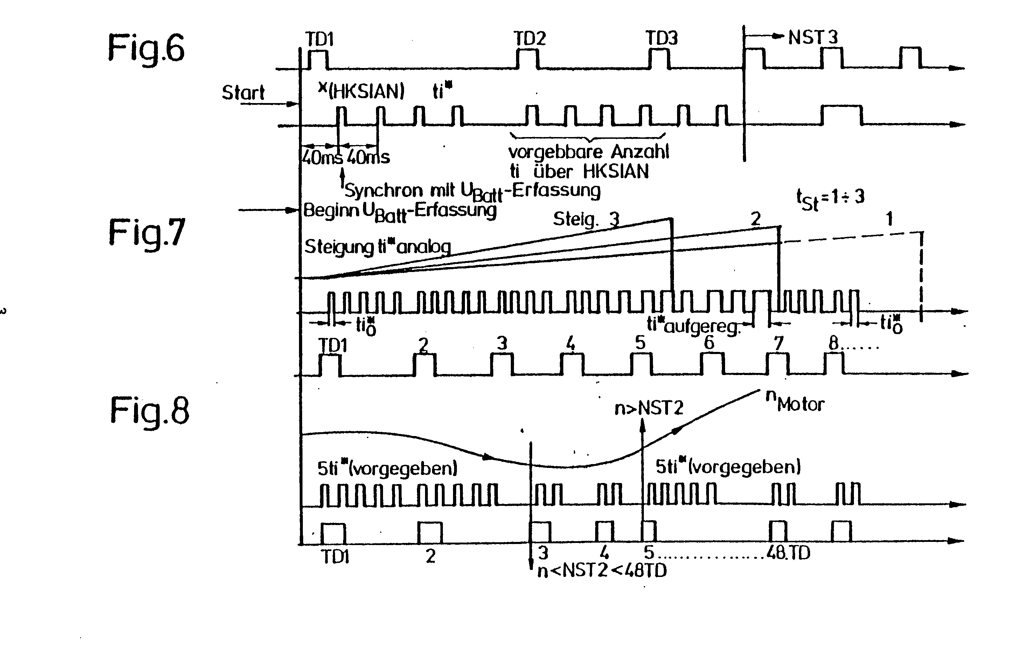

Ausführungsbeispiele der Erfindung sind in der Zeichnung dargestellt und werden in der nachfolgenden Beschreibung näher erläutert. Es zeigen Fig. 1 stark schematisiert ein Übersichtsschaubild eines elektronischen Brennkraftmaschinensteuersystems, Fig. 2 den für sich gesehen bekannten Verlauf einer bisherigen Kaltstartfunktion, aus welcher sich auch die für die Bestimmung dieser Funktion bisher erforderlichen Faktoren mit ihren Bezeichnungen entnehmen lassen, Fig. 3 den Verlauf der durch die Erfindung realisierten neuen Kaltstartfunktion (KS-Funktion), Fig. 4 bezogen auf das Auftreten von Zündzeitpunkten ein Ablaufbeispiel für das Auftreten der KS-Kurzdauer-Einspritzimpulse ti*, Fig. 5 ein weiteres Ausführungsbeispiel der Erfindung, mit unterschiedlichem Ablauf der Kaltstart-Einspritzimpulse ti*, und die Figuren 6, 7 und 8 zeigen ähnlich Fig. 4 auf die jeweiligen TD-Intervalle bezogen Ablaufdiagramme von Kurzimpulsen mit Bestimmung der ti*-Anzahl aus Tabelle, mit zusätzlicher Steigungsangabe bei Aufregelung und mit zusätzlicher Motordrehzahlangabe.

Beschreibung der Ausführungsbeispiele der Erfindung

Im folgenden wird speziell auf die Signalerzeugung im Startfall bei einem elektronischen Brennkraftmaschinensteuersystem (und insbesondere geeignet für die mit LH-Jetronic bezeichnete Kraftstoffeinspritzanlage der Anmelderin) eingegangen. Bei diesem System wird der Kraftstoff über Einspritzventile zugemessen, die intermittierend mit impulsbreitenmodulierten Signalen angesteuert werden.

Entsprechend Fig. 1 weist das elektronische Brennkraftmaschinensteuersystem eine Signalerzeugerstufe 10 für Einspritzimpulse ti auf, mit denen Einspritzventile 11 angesteuert werden; ferner ist, zum umfassenden Verständnis, eine Signalerzeugerstufe 12 auch für die Zündung zum Ansteuern der Zündkerzen 13 noch dargestellt. Die wesentlichsten Eingangsgrößen für die beiden Signalerzeugerstufen 10 und 12 kommen von Sensoren für die Drehzahl, die Temperatur und die Last. Außerdem wird der Einspritzsignalerzeugerstufe 10 noch ein Startsignal zugeführt.

Die in Fig. 1 gezeigte, stark schematisierte Anordnung dient lediglich dazu, den Anwendungs- und Wirkungsbereich der Erfindung zu verdeutlichen; maßgebend für die Erfindung sind Art und Ausbildung der Funktionsverläufe während des Starts, wie dies in den nachfolgenden Diagrammen angegeben ist. Daher ist auch eine spezielle Schaltung für die Realisierung der durch die Erfindung vorgegebenen Funktionen, Abläufe und Steuerungsprogramme entbehrlich, da derzeitige Brennkraftmaschinensteuersystem rechner- oder mikroprozessorgesteuert sind und die jeweiligen Funktionen und Werte aus einem Speicher bei bestimmten Programmpunkten abrufbar sind. Die in der Zeichnung dargestellten Diagramm- und Funktionsverläufe verdeutlichen daher funktionelle Grundwirkungen der Erfindung, wobei es sich versteht, daß die einzelnen, für die Realisierung der Erfindung, jeweils eingesetzten Bausteine und Blöcke in analoger, digitaler oder auch hybrider Technik aufgebaut sein können, oder auch, wie erwähnt, ganz oder teilweise zusammengefaßt, entsprechende Bereiche von programmgesteuerten digitalen Systemen, also Mikroprozessoren, Mikrorechnern u. dgl. sein können.

Bei der in Fig. 2 dargestellten, bisherigen Kaltstartfunktion mit ihrer Unterteilung in einen Bereich I (Plateaubereich), in welchem sich die Einspritzzeit beispielsweise bestimmen konnte durch die in Fig. 5 dargestellte "ti-Ausgabe alt" mit sich alle 180° KW abwechselnden, die Einspritzzeit bestimmenden Schaltzuständen von ti-high/low, so daß jeweils für 180° KW voll eingespritzt und für die sich anschließenden 180° KW der Einspritzimpuls unterbrochen ist, dem sich daran anschließenden Bereich II der Kaltstartmengenabregelung mit den Abregelfunktionen GKS und HKS (allgemeiner Knickfunktionsverlauf) bis zum Erreichen einer oberen Startdrehzahl NST3T und dem sich daran anschließenden Übergang in den Bereich III, bei welchem die Kaltstartsteuerung abgeregelt ist und sich die Nachstartanhebung (NSA) bzw. Warmlauffunktionen (WL) anschließen, wurde zwar die für das Anspringen einer Brennkraftmaschine erforderliche Kraftstoffmenge zugeführt, jedoch in der üblich intermittierenden Weise jeweils auf Zündzeitpunkte bezogen und durch entsprechende Verlängerung der Impulsdauern für den Kaltstart.

Die Erfindung löst sich von dieser Konzeption und schlägt vor, die Dauer der bisherigen Einspritzimpulse oder eine sonstige vorgegebene Größe durch einen vorgegebenen Faktor zu dividieren und mit dieser hierdurch gewonnenen Impulsbreite innerhalb jeweils eines Zündzeitpunktintervalls im linearen Zeitmaßstab die Einspritzventile wiederholt, gegebenenfalls unter Zugrundelegung eines weiteren Faktors anzusteuern, wobei ferner der Beginn des jeweils ersten, im folgenden als Kaltstart-Kurzdauer-Einspritzimpuls ti* und abgekürzt als Kurzimpuls ti* bezeichneten Einspritzimpulses auf die Erfassung der UBatt synchronisiert ist und mit einem auf einen jeweiligen Zündzeitpunkt bezogenen sogenannten TD-Signal ausgelöst wird.

Ein in Fig. 4 gezeigtes erstes Ablaufbeispiel verdeutlicht, was gemeint ist. Beim Start, und zwar die Bereiche I und II auf den Zeitmaßstab bezogen des Kurvenverlaufs der Fig. 2 überdeckend, wird die Einspritzzeit "ti-high/low", die alle 180° KW auftritt, durch eine, jeweils in einem vorgegebenen ms-Abstand auftretende Einspritzung "ti-high/low": z alle y ms ersetzt (mit z=variabler Teiler und y wählbar vorgebbarer Zeitabstand zwischen den ti*-Kurzimpulsen).

Geht man zu numerischen Werte über, dann kann beispielsweise statt des einen Einspritzimpulses pro 180° KW alle y=40 ms ein Kurzimpuls ti* (mit z beispielsweise=4) im linearen Zeitabstand eingespritzt werden durch entsprechende Ansteuerung der Endstufe für das oder die Einspritzventile, wobei es natürlich eine Frage der beim Start jeweils erreichten Drehzahl, also des Auftreten der Zündzeitpunkte TD und des durch diese gebildeten jeweiligen Abstandes ist, wieviele (Anzahl=x) der Kurzimpulse ti* in ein TD-Intervall hineinpassen. Entsprechend Fig. 4 sind zwischen einem ersten TD1-Impuls und einem zweiten TD2-Impuls fünf Einspritzkurzimpulse ti* plaziert mit einem Zeitabstand von 40 ms, während in den TD-Abstand zwischen TD2 und TD3 bei n-Zunahme lediglich vier Einspritzkurzimpuls ti* passen. Dadurch ergibt sich auch, wie ohne weiteres einzusehen ist, einen in vergleichsweise einfacher und daher auch besonders vorteilhafter Weise erzielte Mengenabregelung, die dadurch erfolgt, daß mit kürzer werdenden TD-Abständen weniger Einspritzkurzimpulse ti* ausgegeben werden. Es ergibt sich daher dann auch ein bei natürlichen Vorgängen durchaus erwünschter, kontinuierlicher Übergangsverlauf der Kaltstartfunktion entsprechend Fig. 3 allein dadurch, daß die Zündzeitpunktabstände bis zum Erreichen der oberen Startdrehzahl geringer werden. Durch die Vielzahl der kurzen Einspritzstartimpulse, die jeweils in ein Zündzeitpunktintervall passen, ergibt sich eine wesentlich bessere Aufbereitung des Kraftstoffes durch eine so feine Vernebelung, daß die Zündfähigkeit praktisch unmittelbar nach Startbeginn schon erreicht wird.

Es wird darauf hingewiesen, daß die durch die vorliegende Erfindung erzielte Häufigkeitsverteilung einer Vielzahl kurzdauernder Kaltstarteinspritzimpulse ti* im zeitlinearen Maßstab nicht zu verwechseln ist und auch nicht in einem Bezug steht mit der für sich gesehen bekannten Maßnahme, bei Startvorgängen bei Brennkraftmaschinen unter Umständen einen Zwischenimpuls zwischen die durch die normalen und auch normal berechneten Einspritzimpulse, gleichgültig, ob dieser nun überdeckend bei einem Einspritzimpulse ergeht oder nicht, auszugeben.

Zur Erleichterung des Verständnisses vorliegender Erfindung und zur Vereinfachung der Erläuterung der Erfindung werden nachfolgend anhand der Tabelle zunächst sich häufig wiederholende Parameterbezeichnungen in ihrer technischen Bedeutung erläutert:

FKST=Faktor Kaltstart (T=aus Tabelle)=f(θ)

TLST=(Grund)-Einspritzzeit $t_L$ im Start (mit ti ist der endkorrigierte Einspritzimpuls bezeichnet)

TIH,L=Einspritzzeit+Spannungskorrektur aus High und Low-Byte

TMOT=Motortemperatur (θ)

NST2=(Wieder)Einsatzdrehzahlschwelle von KSIANZ bei Durchtauchen der Drehzahl unter vorgegebenen Wert (z.B. 341 min⁻¹)

KSIANZ=Anzahl ti/TD bei n<NST2<48 TD

HKSIAN=Tabelle für Anzahl Einspritzungen pro TD in vorgegebenen Schritten (z.B. 8 TD) von φ TD bis 48 TD

NST3T=Obere Startdrehzahltabelle=f(θ)

KSSTEI=Parameter zur ti-Steigungsvariation

Bei dem in Fig. 5 dargestellten Ausführungsbeispiel erkennt man auch ben bisherigen Verlauf der "Kaltstart-ti-Ausgabe alt", wobei es die Erfindung erreicht, daß die abgespritzte sogenannte FKST-ti-Menge so fein vernebelt wird, daß sich ein zündfähiges Gemisch spontan und umgehend ergibt. Dabei wird die jetzt als FKST-ti für den Startbereich pro Zündung (TD) abgespritzte Menge an Kraftstoff so aufgeteilt, daß sich, mumerisch gesehen, im jeweiligen Zündzeitpunktintervall x Kurzimpulse ti* nach der Formel x · ti/z ergeben, mit beispielsweise und vorzugsweise z=4. Realisieren läßt sich dies beispielsweise dadurch, daß mit einer vorgegebenen Frequenz, etwa 100 Hz, ein Zähler beaufschlagt wird, wobei mit dem ersten Zündumpuls (1 · TD) vom Rechner ein Zeitraster von x Impulsen gebildet wird, wie im Kurvenverlauf der Fig. 5 angedeutet, mit welchem die Endstufe für die Einspritzventile angesteuert wird. Es werden somit zwischen zwei Zündungen x ti*-Impulse ausgegeben, wobei dann, wenn der jeweilige TD-Abstand größer als die x ti-Impulse in der zeitlichen Aufeinanderfolge ist, mit dem nächsten Interrupt=TD das xfache ti* erneut gestartet wird. Ergibt sich ein TD-Abstand von <x ti*, dann wird die Auszählung abgebrochen, wodurch sich auch hier die gewünschte Abregelung auf eine vorgegebene Menge erreichen läßt. In der Diagrammdarstellung der Fig. 5 sind im übrigem die Zündzeitpunkte TD im gleichen Zeitabstand angelegt. Sobald die obere Startdrehzahl NST3T erreicht ist (Übergang in Nachstart und Warmlauf), wird die Frequenzsteuerung aufgehoben. Durch diese Vielfachkurzeinspritzimpulse ti* für den Kaltstart ergeben sich schließlich noch die Vorteile, daß die Abhängigkeit von der die Motordrehzahl beeinflussenden Batteriespannung, von der Luftfeuchtigkeit und der Strahlqualität der Einspritzventile wesentlich geringer ist.

Die bevorzugten numerischen Werte für die Teilergröße z liegen zwischen 4 und 16, innerhalb welchen Bereichs die Unterteilung der Vervielfachung der Kaltstarteinspritzung bevorzugt angesiedelt werden kann, unter Berücksichtigung der Anzugs- und Abfallzeit der Einspritzventile bei kleiner Batteriespannung.

Die Anzahl x der Kurzimpulse ti* läßt sich auch programmäßig steuern, etwa als Funktion der Kurbelwellenumdrehung, wobei eine Tabelle HKSIAN, wie weiter vorn bei der Definition der Parameterbezeichnungen schon angegeben, zugrundegelegt werden kann, die in geeigneter Weise gespeichert ist, also x=f(KWU) bzw. x=f(HKSIA)$_{TAB}$.

Der in Fig. 6 gezeigte Verlauf zeigt die aus der gespeicherten Tabelle HKSIAN gewonnene Anzahl x der Kurzimpulse ti* für ein beliebiges Ausführungsbeispiel, wobei ein Zeitabstand zwischen den einzelnen Kurzimpulsen von 40 ms (als eine mögliche Ausführungsform) zugrundegelegt ist.

Dabei, und dies ist ein weiteres wesentliches Merkmal vorliegender Erfindung, wird, um den Einfluß der bei einem Kaltstart üblicherweise stark schwankenden und niedrigen Batteriespannung zu eliminieren, also um die spannungsabhängigen Anzugszeiten der Ventile zu berücksichtigen, der Zustand der Batterie erfaßt und zu jeder Einspritzzeitdauer eine proportionale Korrektur als f(U$_{Batt}$) aufaddiert. Diese U$_{Batt}$-Erfassung erfolgt synchron im dem vorgegebenen Zeitraster, also hier alle 40 ms, so daß ein ti*-Kurzimpuls wärhend des Startvorgangs der folgenden Formel eingespritzt wird:

$$ti^* = FKST(\theta) \cdot TLST + ts_{Start}(U_{Batt}).$$

Bei diesem Ausführungsbeispiel der Abhängigkeit der Einspritzkurzimpuls-Anzahl x vom Tabellenwert, kann die auf diese Weise zugeführte Kaltstartmenge aufgrund der Anweisungen aus der Tabelle zwischen jeweils zwei Zündungen über die steigenden Kurbelwellenumdrehungen abgeregelt werden, um eine Überfettung des Gemisches zu verhindern. Die Anzahl der Einspritzungen x zwischen zwei Zündungen ist also eine Funktion der Zeite (Δt von TD zu TD) nach dem Start. Diese Abregelung erfolgt hier aktiv unter Berücksichtigung der erfaßten Anzahl der Kurbelwellenumdrehungen pro Zeiteinheit, nicht durch Ablauf der Zeitdauer zwischen jeweils zwei TD-Impulsen, wie beim Ablaufbeispiel der Fig. 4. Hier spielt auch die jeweils möglich Wahl des Kurzimpuls-Zeitabstandes y herein.

Ferner können sich unter Umständen mengenmäßige Kraftstoffprobleme beim Übergang aus der Startpulse in die Nachstartphase ergeben, bei welcher dann wieder alle 360° KW eingespritzt wird. Um diesem Problem vorzubeugen, kann entsprechend einem in der Darstellung der Fig. 7 gezeigten Ausführungsbeispiel nach einer vorgegebenen, also programmierbaren Zeit, die sich als Anzahl TD ab Startbeginn bestimmen lassen kann, aufgeregelt werden, d.h. die Kurzimpulse ti* nehmen in ihrer jeweiligen relativen Dauer zu, wie Fig. 7 zeigt, wobei auch lediglich zwischen dem Kurzdauer-ti*-Grundimpuls ti$_{o*}$ und einem aufgeregelten ti*-Impuls unterschieden werden kann. Ferner kann diese Aufregelung in einer vorgegebenen Anzahl von Steigungsvarianten erfolgen, wobei in Fig. 7 drei verschiedene Steigungen 1, 2, 3 dargestellt sind.

Allerdings muß diese Aufregelung dann, wenn innerhalb der indirekt vorgegebenen Zeit (=Anzahl der TD-Impuls ab Startbeginn ohne Aufregelung) der Startvorgang nicht abgeschlossen ist, d.h. daß die Brennkraftmaschine die temperaturabhängige Drehzahlschwelle NST3 nicht erreicht hat, wieder zurückgesetzt werden, um ein Absterben des Motors durch die durch die Aufregelung bewirkte Überfettung zu verhindern.

Um allgemein eine Überfettung, also ein Absaufen der Brennkraftmaschine bei langer Startzeit zu unterbinden, kann ferner nach einer vorgegebenen Anzahl TD (≧48) die Anzahl der ti*/TD auf minimal einen ti* reduziert werden.

Schließlich ist es entsprechend dem Ausführungs beispiel der Fig. 8 möglich, eine weitere "Absaufsperre" so zu realisieren, daß an einer vorgegebenen unteren Drehzahlschwelle (n-Schwelle NST2) wenn diese nämlich unterschritten wird, auf eine wählbare (geringere) Anzahl von ti*/TD übergangen wird. Man erkennt in Fig. 8, daß bei TD 3 die Motordrehzahl soweit abfällt, daß diese geringer als TST2 wird, so daß ab diesem Zeitpunkt lediglich noch bei dem dargestellten Ausführungsbeispiel zwei ti*-Kurzimpulse eingespritzt werden, und zwar bis zum Zeitpunkt TD 5, ab welchem dann weider eine vorgegebene Anzahl von ti*-Kurzimpulsen, nämlich x=5 eingespritzt wird, bis eine vorgegebene TD-Anzahl (TD≧48) erreicht ist, ab welchem dann wiederum eine Reduzierung der ti*-Anzahl erfolgt, wie weiter vorn schon erwähnt.

In beiden Fällen, also beim Unterschreiten der Drehzahlschwelle NST2 sowie oberhalb dieser Drehzahlschwelle bestimmt sich die Anzahl der zuzuführenden Kurzimpulse ti* vorprogrammiert aus den erwähnten Tabellen KSIANZ bzw. HKSIAN.

## Patentansprüche

1. Verfahren zur Kaltstartsteuerung bei einem elektronischen Brennkraftmaschinensystem mit Signalerzeugerstufen für die Kraftstoffzumessung, wobei während des Starts eine erhöhte Kraftstoffzumessung, gegebenenfalls mit gleichzeitig oder sich anschließender Mengenabregelung, erfolgt, indem pro aufeinanderfolgendem Zündzeitpunktintervall eine vorgegebene, die Anzahl der bei Kaltstart pro Zeiteinheit und/oder pro Anzahl der Umdrehungen und/oder pro Zündzeitpunktanzahl ausgegebenen Einspritzimpulse (ti) um ein Vielfaches übersteigenden Anzahl von aufeinanderfolgenden Kaltstart-Kurzdauereinspritzimpulsen (ti*) der Endstufe zur Ansteuerung des Einspritzventils oder der—Ventile zugeführt werden, wobei bei sich enger stellenden Zündzeitpunktintervallen (Drehzahlerhöhung) die Erzeugung der Kaltstart-Kurzdauereinspritzimpulse (ti*) jeweils abgebrochen wird, dadurch gekennzeichnet, daß die für den Startbereich pro Zündung abzuspritzende Kraftstoffmenge aufgeteilt wird in die gleichmäßige Anzahl zueinander einen gleichmäßigen Zeitabstand aufweisenden Kaltstart-Kurzdauereinspritzimpulse (ti*) und daß der zeitliche Abstand zwischen den Kaltstart-Kurzdauereinspritzimpulsen unabhängig ist von einem vorgegebenen Teilungsfaktor (z), derart, daß bei großen Zündzeitpunktintervallen (td1/td2/td3 . . .) mehr und bei kurzen Zündzeitpunktintervallen weniger Kaltstart-Kurzdauereinspritzimpulse in diese Intervalle fallen.

2. Verfahren nach Anspruch 1, dadurch gekennzeichnet, daß die Anzahl der Kurzimpulse (ti*) aus einer gespeicherten Tabelle (HKSIAN) als Funktion der Kurbelwellenumdrehung (x=f (KWU)) bestimmt wird.

3. Verfahren nach Anspruch 2, dadurch gekennzeichnet, daß die gespeicherte Tabelle (HKSIAN) die Anzahl der Einspritzungen (Anzahl x der Kurzimpulse (ti*) für jedes Zeitintervall von TD-Impuls zu TD-Impuls konstant für eine vorgegebene Anzahl von TD-Abständen vom Startbeginn (0 TD) bis zu einer vorgegebenen Gesamtzahl (48 TD) enthält.

4. Verfahren nach einem der Ansprüche 1 bis 3, dadurch gekennzeichnet, daß nach einer vorgebbaren (programmierbaren) Zeitdauer (Anzahl TD ab Startbeginn) die Kaltstartmenge durch Vergrößerung der Dauer der Kurzimpulse (ti) aufgeregelt wird zur Erleichterung des Übergangs aus der Start- in die Nachstartphase.

5. Verfahren nach Anspruch 4, dadurch gekennzeichnet, daß die Aufregelung dann rückgesetzt wird, wenn innerhalb einer vorgegebenen Zeitdauer ab Startvorgang dieser durch Erreichen der temperaturabhängigen Drehzahlschwelle (NST3) nicht abgeschlossen wird.

6. Verfahren nach einem der Ansprüche 1 bis 5, dadurch gekennzeichnet, daß zur Vermeidung einer Überfettung (Absterben des Motors) bei Unterschreiten einer vorgegebenen weiterne Drehzahlschwelle (n-Schwelle=NST2) die aus einer ersten Tabelle (HKSIAN) vorgegebene Anzahl von Kurzimpuls-Einspritzungen auf eine geringere Anzahl reduziert wird.

7. Verfahren nach Anspruch 6, dadurch gekennzeichnet, daß eine weitere (gespeicherte) Tabelle (KSIANZ) vorgesehen ist zur Bestimmung der Anzahl (x) von Kurzzeitimpulsen (ti*) pro Zeitintervall (TD) bei Unterschreiten der zweiten Drehzahlschwelle (NST2).

8. Verfahren nach Anspruch 4, dadurch gekennzeichnet, daß die Aufregelung (Erhöhung der Kraftstoffmenge) nach vorgebenen Steigungsvarianten erfolgt.

9. Verfahren nach einem der Ansprüche 1 bis 8, dadurch gekennzeichnet, daß nach Ablauf einer vorgegebenen Zeitdauer (Überschreiten der auf die Anzahl der Zündimpulse bezogenen Anzahl von TD-Impulsen ≥48) die Anzahl (x) der Kurzimpulse (ti*/TD) auf eine vorgegebene Anzahl, mit minimal einem Kurzimpuls (ti*) pro TD reduziert wird.

10. Verfahren nach einem der Ansprüche 1 bis 9, dadurch gekennzeichnet, daß synchron zur Erzeugung jedes Starteinspritzimpulses (ti*) eine Batteriespannungserfassung durchgeführt wird und zur Berücksichtigung der spannungsabhängigen Anzugszeiten der Einspritzventile eine proportionale Batteriespannungskorrektur additiv durchgeführt wird, derart, daß sich der jeweiligen Kurzimpuls ergibt zu

$$ti^{*}=FKST\,(\theta) \cdot TLST+ts_{Start}(U_{Batt}),$$

dabei beideuten FKST einen Kaltstartfaktor, TLST eine Grundeinspritzzeit im Startfall, und $ts_{Start}(U_{Batt})$ eine batteriespannungsabhängige Korrekturgröße.

11. Verfahren nach einem der Ansprüche 1 bis 10, dadurch gekennzeichnet, daß die jeweils zwischen zwei Zündungen zugeführte Kaltstartmenge über steigende Kurbelwellenumdrehungen abgeregelt wird.

12. Elektronisches Brennkraftmaschinensteuersystem zur Durchführung des Verfahrens nach einem oder mehreren der Ansprüche 1 bis 11, zur Kaltstartsteuerung, mit Signalerzeugerstufen für die Kraftstoffzumessung und die Zündung, ferner mit Mitteln, damit pro aufeinanderfolgendem Zündzeitpunktintervall eine vorgegebene, die Anzahl der bei Kaltstart pro Zeiteinheit und/ oder pro Anzahl der Umdrehungen und/oder pro Zündzeitpunktanzahl ausgegebenen Einspritzimpulse (ti) um ein Vielfaches übersteigende Anzahl von aufeinanderfolgenden Kaltstart-Kurzdauereinspritzimpulsen (ti*) der Endstufe zur Ansteuerung des Einspritzventils oder der Einspritzventile zugeführt werden, wobei bei sich enger stellenden Zündzeitpunktintervallen (Drehzahlerhöhung) die Erzeugung der Kaltstart-Kurzdauereinspritzimpulse (ti*) jeweils unterbrochen wird, dadurch gekennzeichnet, daß Mittel vorgesehen sind, damit die für den Startbereich pro Zündung abzuspritzende Kraftstoffmenge aufgeteilt wird in die gleichmäßige Anzahl zueinander einen gleichmäßigen Zeitabstand aufweisenden Kaltstart-Kurzdauereinspritzimpulse (ti*) und daß der zeitliche Abstand zwischen den Kaltstart-Kurzdauereinspritzimpulsen unabhängig ist von einem vorgegebenen Teilungsfaktor (z), derart, daß bei großen Zündzeitpunktintervallen (td1/td2/td3 . . .) mehr und bei kurzen Zündzeitpunktintervallen weniger Kaltstart-Kurzdauereinspritzimpulse in diese Intervalle fallen.

## Revendications

1. Procédé de commande de démarrage à froid pour des systèmes électroniques de moteurs à combustion interne comportant des étages générateurs de signaux pour le dosage du carburant, et pendant le démarrage, on effectue un dosage plus important de carburant, le cas échéant avec régulation simultanée ou consécutive de quantité, en ce que dans l'intervalle du point d'allumage, on fournit le nombre des impulsions d'injection (ti) émises au démarrage à froid par unité de temps et/ou le nombre de rotations et/ou le nombre d'impulsions d'injection (ti) fournies le canal de point d'allumage, pour un nombre augmenté d'un multiple d'impulsions d'injection (ti*) de courte durée, de démarrage à froid qui sont fournies aux étages de sortie pour commander les injecteurs et/ou les soupapes d'injecteurs, et lorsque les intervalles d'instant d'allumage se rapprochent (augmentation de la vitesse de rotation), on arrête l'émission des impulsions de courte durée (ti*) de démarrage à froid, procédé caractérisé en ce qu'on subdivise la quantité de carburant à injecteur par injection dans la zone de démarrage à froid suivant un nombre régulier d'impulsions d'injection de courte durée de démarrage à froid (ti*) présentant une répartition régulière et en ce que l'intervalle entre les impulsions d'injection de courte durée de démarrage à froid est indépendant d'un coefficient de division (z) prédéterminé, de sorte que pour les grands intervalles de point d'allumage (td1, td2, td3 . . .), il y ait plus d'impulsions d'injection de courte durée de démarrage à froid et pour des intervalles d'instant d'allumage plus courts, moins de telles impulsions.

2. Procédé selon la revendication 1, caractérisé en ce qu'on détermine le nombre de courtes impulsions (ti*) à partir d'un tableau mis en mémoire (HKSIAN) en fonction de la vitesse de rotation du vilebrequin (x=f (KWU)).

3. Procédé selon la revendication 2, caractérisé en ce que le tableau inscrit en mémoire (HKSIAN) contient le nombre d'injections (nombre x des impulsions de courte durée (ti*) pour chaque intervalle de temps entre les impulsions TD pour avoir un nombre prédéterminé d'états TD à partir du début du démarrage (0 TD) jusqu'à un total global prévu (48 TD).

4. Procédé selon l'une des revendications 1 à 3, caractérisé en ce qu'après une durée (nombre TD compté à partir du démarrage) prédéterminée (programmable), on supprime par régulation la quantité de démarrages à froid en augmentant la durée des impulsions courtes (ti) pour faciliter le passage de la phase de démarrage à la phase postdémarrage.

5. Procédé selon la revendication 4, caractérisé en ce que la régulation dans le sens ascendant est mise au repos si à l'intérieur d'un intervalle de temps prédéterminé compté à partir du début du démarrage, cette situation n'est pas terminée lorsqu'on atteint le seul de vitesse de rotation dépendant de la température (NST3).

6. Procédé selon l'une des revendications 1 à 5, caractérisé en ce que pour éviter un enrichissement trop important (arrêt du moteur lorsqu'on passe en-dessous d'un autre seuil de vitesse de rotation, prédéterminé (seuil n=NST2), on réduit le nombre des courtes impulsions-injections prédéterminées par un premier tableau (HKSIAN) à un nombre plus faible.

7. Procédé selon la revendication 6, caractérisé en ce qu'il prévu un autre tableau (KSIANZ) inscrit en mémoire pour déterminer le nombre (x) d'impulsions de courte durée (ti*) par intervalle de temps (TD) lorsqu'on passe en-dessous du second seul de vitesse de rotation (NST2).

8. Procédé selon la revendication 4, caractérisé en ce que la régulation dans le sens ascendant (augmentation de la quantité de carburant) se fait selon des variantes de croissance prédéterminées.

9. Procédé selon l'une des revendications 1 à 8, caractérisé en ce qu'à la fin d'une durée prédéterminée (dépassement du nombre d'impulsions TD≥48, nombre rapporté au nombre d'impulsions d'allumage), on réduit le nombre (x) d'impulsions de courte durée (ti*/TD) à un nombre prédéterminé avec au minimum une impulsions courte (ti*) par TD.

10. Procédé selon l'une des revendications 1 à 9, caractérisé en ce qu'en synchronisme avec l'obtention des impulsions d'injection de démarrage (ti*), on détecte la tension de la batterie et pour tenir compte du temps de montée des injecteurs qui dépend de la tension, on fournit par addition une correction de tension de batterie, proportionnelle de manière à obtenir l'impulsion courte respective

$$FKST = ti^* = FKST\ (\theta) \cdot TLST + ts_{demarrage}\ (U_{Batt});$$

FKST représente le coefficient de démarrage à froid; TLST est un temps de base d'injection pour le démarrage et $ts_{Start}(U_{Batt})$ représente une grandeur de correction dépendant de la tension de la batterie.

11. Procédé selon l'une des revendications 1 à 10, caractérisé en ce qu'on règle dans le sens de la diminution la quantité de démarrage fournie chaque fois entre deux allumages en augmentant la vitesse de rotation du vilebrequin.

12. Système de commande électronique d'un moteur à combustion interne pour mettre en

oeuvre le procédé selon l'une ou plusieurs des revendications 1 à 12 avec commande du démarrage à froid, étage créant des signaux pour le dosage du carburant et pour l'allumage ainsi que des moyens pour que à chaque intervalle entre les instants d'allumage successifs, on fournisse un nombre prédéterminé d'impulsions d'injection (ti), nombre qui correspond au nombre d'impulsions par unité de temps au démarrage à froid et/ou au nombre de rotations et/ou aux impulsions d'injection (ti) émises en fonction du nombre d'instants d'injection qui dépassent d'un multiple par rapport aux impulsions de courte durée d'injection de démarrage à froid successives (ti*) dans l'étage de sortie pour commander le ou les injecteurs, et le rétrécissement des intervalles entre les instants d'injection (augmentation de la vitesse de rotation) interrompant chaque fois la création des impulsions d'injection de courte durée de démarrage à froid (ti*), système caractérisé par des moyens de manière à diviser la quantité de carburant à injecteur dans la zone de démarrage pour chaque allumage en un nombre régulier d'impulsions d'injection de courte durée de démarrage à froid (ti*) ayant le même intervalle de temps et en ce que l'intervalle de temps entre les impulsions d'injection de courte durée de démarrage à froid soit indépendant d'un coefficient de division (z) prédéterminé de manière que pour les grands intervalles de temps d'allumage (td1, td2, td3 . . .), on ait plus d'impulsions d'injection de courte durée de démarrage à froid que pour les intervalles courts entre les instants d'allumage.

## Claims

1. Process for cold starting control in an electronic internal combustion engine system having signal generation stages for the fuel metering, in which increased fuel metering, possibly with simultaneous or subsequent flow control, takes place during starting, specified number of sequential cold start short-duration injection pulses (ti*) exceeding by a multiple the number of the injection pulses (ti) output during a cold start per time unit and/or per number of revolutions and/or per number of ignition times being supplied to the final stage per sequential ignition time interval to control the injection valve or valves, the generation of the cold start short-duration injection pulses (ti*) being interrupted whenever the ignition time intervals become narrower (increase in rotational speed), characterized in that the fuel quantity to be injected per ignition for the starting range is subdivided into the equal number of cold start short-duration injection pulses (ti*) having an equal time between them and in that the time between the cold start short-duration injection pulses is independent of a specified division factor (z) in such a way that, in the case of large ignition time intervals (td1/td2/td3 . . .), more cold start short-duration injection pulses occur in these intervals and, in the case of short ignition time intervals, fewer cold start short-duration injection pulses occur in these intervals.

2. Process according to Claim 1, characterized in that the number of short pulses (ti*) is determined from a stored table (HKSIAN) as a function of the crankshaft revolution (x=f (KWU)).

3. Process according to Claim 2, characterized in that the stored table (HKSIAN) holds the number of injections (number x) of the short pulses (ti*) constant for each time interval from TD pulse to TD pulse for a specified number of TD intervals from the beginning of starting (0 TD) up to a specified total number (48 TD).

4. Process according to one of Claims 1 to 3, characterized in that, after a specifiable (programmable) time (number TD from the beginning of starting), the cold starting quantity is controlled by increasing the duration of the short pulses (ti) in order to facilitate the transition from the starting phase to the post-starting phase.

5. Process according to Claim 4, characterized in that the controlling is reset whenever, within a specified time duration from the starting procedure, the latter has not been concluded by reaching the temperature-dependent rotational speed threshold (NST3).

6. Process according to one of Claims 1 to 5, characterized in that in order to avoid an over-rich mixture (engine stopping), the number of short pulse injections specified from a first table (HKSIAN) is reduced to a smaller number when the rotational speed is less than a specified further rotational speed threshold (n threshold=NST2).

7. Process according to Claim 6, characterized in that a further (stored) table (KSIANZ) is provided to determine the number (x) of short period pulses (ti*) per time interval (TD) when the rotational speed is less than the second rotational speed threshold (NST2).

8. Process according to Claim 4, characterized in that the control (increase in the fuel quantity) takes place according to specified slope variants.

9. Process according to one of Claims 1 to 8, characterized in that, after a specified time duration has elapsed (the number of TD pulses referred to the number of ignition pulses—not less than 48—being exceeded), the number (x) of the short pulses (ti*/TD) is reduced to a specified number with one short pulse (ti*) per TD as a minimum.

10. Process according to one of Claims 1 to 9, characterized in that a battery voltage recording is carried out synchronously with the generation of each starting injection pulse (ti*) and, in order to take account of the voltage-dependent operating times of the injection valves, a proportional battery voltage correction is carried out additively in such a way that the particular short pulse is given by

$$ti^* = FKST(\theta) \cdot TLST + ts_{Start}(U_{batt}),$$

in which FKST signifies a cold starting factor, TLST signifies a basic injection time in the starting

case and $ts_{Start}(U_{Batt})$ signifies a correction parameter dependent on the battery voltage.

11. Process according to one of Claims 1 to 10, characterized in that the cold start quantity supplied in each case between two ignitions is controlled in the downward direction by means of increasing crankshaft revolutions.

12. Electronic internal combustion engine system for carrying out the process according to one or more of Claims 1 to 11 for cold starting control, having signal generation stages for the fuel metering and the ignition, also having means such that a specified number of sequential cold start short-duration injection pulses (ti*) exceeding by a multiple the number of the injection pulses (ti) output during a cold start per time unit and/or per number of revolutions and/or per number of ignition times being supplied to the final stage per sequential ignition time interval to control the injection valve or valves, the generation of the cold start short-duration injection pulses (ti*) being interrupted whenever the ignition time intervals become narrower (increase in rotational speed), characterized in that means are provided such that the fuel quantity to be injected per ignition for the starting range is subdivided into the equal number of cold start short-duration injection pulses (ti*) having an equal time between them and in that the time between the cold start short-duration injection pulses is independent of a specified division factor (z) in such a way that, in the case of large ignition time intervals (td1/td2/td3 . . .), more cold start short duration injection pulses occur in these intervals and, in the case of short ignition time intervals, fewer cold start short duration injection pulses occur in these intervals.

# Fig.1

Start

$V_L$

n

Last

$\vartheta$

10
Q/n korr.
$t_i$

11

12

13

# Fig.2

ZØVNKS

TLST
*FKS

GKS

HKS

Übergang in NSA×WL

Bereich I | Bereich II | Bereich III

t

NKS-Schwelle

NST3T
(obere Schaltdrehzahl)

# Fig.3

TLST
*FKS

Übergang in NSA × WL

TD TD · · · · · · · · ·

NST3T

t

Fig.4

Fig.5

2

Fig.6

Fig.7

Fig.8

EP 0 307 393 B1